# FASCICULE DE BREVET EUROPEEN

(11) **EP 2 786 203 B1**
(45) Date de publication et mention de la délivrance du brevet: **23.09.2015**
(21) Numéro de dépôt: 12813393.1
(22) Date de dépôt: 20.11.2012
(51) Int. Cl.: G02C 13/00, B24B 9/14, B24B 13/005

(54) **SUPPORT DE LENTILLE OPHTALMIQUE POUR DISPOSITIF DE CENTRAGE**
KONTAKTLINSENHALTER FÜR EINE ZENTRIERVORRICHTUNG
OPHTHALMIC LENS HOLDER FOR A CENTERING DEVICE

(30) Priorité: 29.11.2011 FR 1103634
(43) Date de publication de la demande: 08.10.2014
(73) Titulaire: Essilor International (Compagnie Générale d'Optique), 94220 Charenton-le-Pont (FR)
(72) Inventeur: MOLINARO, Andréa, F-94220 Charenton Le Pont (FR); PERNOT, Jérome, F-94220 Charenton Le Pont (FR); AMEURLAIN, Hughes, F-94220 Charenton Le Pont (FR); De SADELEER, Laurent, F-94220 Charenton Le Pont (FR)
(74) Mandataire: Chauvin, Vincent
(86) Numéro de dépôt international: PCT/FR2012/000472
(87) Numéro de publication internationale: WO 2013/079822

(56) Documents cités:
- EP-A1- 1 842 622
- FR-A1- 2 866 719
- JP-A- 2005 316 435
- US-A- 1 134 938

## Description

### DOMAINE TECHNIQUE AUQUEL SE RAPPORTE L'INVENTION

La présente invention concerne de manière générale le centrage de lentilles ophtalmiques, en vue de leur découpage et de leur montage sur des montures de lunettes.

Elle concerne plus particulièrement un support de lentille ophtalmique pour dispositif de centrage, comportant un socle et au moins trois plots qui s'élèvent à partir du socle pour présenter des extrémités libres sensiblement coplanaires, par lesquelles ils sont adaptés à porter la lentille ophtalmique.

Elle concerne également un dispositif de centrage d'une lentille ophtalmique et un procédé d'étalonnage d'un tel dispositif de centrage.

### ARRIERE-PLAN TECHNOLOGIQUE

La partie technique du métier de l'opticien consiste à monter une paire de lentilles ophtalmiques sur une monture de lunettes sélectionnée par un client. Ce montage se décompose en trois opérations principales :
- l'acquisition de la forme souhaitée des lentilles, qui consiste à palper le fond du drageoir de chacun des deux cercles de la monture de lunettes si la monture est du type cerclé, ou à palper la tranche des lentilles de présentation si la monture est du type semi-cerclé ou percé,
- le centrage de chaque lentille qui consiste à déterminer la position qu'occupera chaque lentille sur la monture afin d'être convenablement centrée en regard de la pupille de l'oeil du porteur de lunettes de manière à ce qu'elle exerce convenablement la fonction optique pour laquelle elle a été conçue,
- le détourage de chaque lentille qui consiste à usiner ou à découper son contour à la forme souhaitée, compte tenu des paramètres de centrage définis.

Dans le cadre de la présente invention, on s'intéresse plus particulièrement à la deuxième opération dite de centrage.

Il s'agit concrètement, pour l'opticien, de définir la position que devra occuper le contour souhaité selon lequel la lentille devra être détourée par rapport au référentiel optique de la lentille (typiquement ses marques usuelles), de manière à ce que, une fois la paire de lunettes portée par le porteur de lunettes, la lentille se retrouve convenablement positionnée en regard de la pupille de l'oeil du porteur.

Pour cela, l'opticien dispose la lentille à centrer sur un support tel que défini en introduction, de manière à permettre au dispositif de centrage de repérer les positions des marques peintes ou gravées sur la lentille et d'en déduire la position du point de centrage optique de la lentille à positionner en regard de la pupille d'un des yeux du porteur de lunettes.

La demanderesse a constaté que, malgré le soin apporté à la réalisation et à l'assemblage des éléments structurels et optiques du dispositif de centrage, il arrive qu'une fois les lentilles ophtalmiques détourées, elles ne soient pas correctement centrées dans l'axe des yeux du porteur, ce qui peut entraîner une gêne visuelle pour celui-ci. Les dispositifs de centrage d'une lentille ophtalmique sont décrits par exemple dans les documents US-A-1 134 938, FR-A-2 866 719 ou EP-A-1 842 622.

### OBJET DE L'INVENTION

Afin de remédier à l'inconvénient précité de l'état de la technique, la présente invention propose un support de lentille agencé pour permettre d'étalonner régulièrement et automatiquement le dispositif de centrage.

Plus particulièrement, on propose selon l'invention un support de lentille ophtalmique tel que défini dans la revendication 1.

Par « débouchent librement vers l'avant et vers l'arrière du support », on entend que les ouvertures débouchantes ne sont pas obturées par le reste du support, si bien que la lumière peut traverser le support de part en part au niveau de ces ouvertures traversantes.

La demanderesse a remarqué, dans le cadre ; de ses travaux de recherche, que les composants du dispositif de centrage présentent des formes et positions variables, du fait notamment de leur usure, des divers chocs reçus ou encore des variations de température. L'évolution dans le temps des formes et positions de ces composants concourent à diminuer la précision du centrage de la lentille.

Alors, grâce à l'invention, le support est conçu, pour permettre au dispositif de centrage de réaliser régulièrement et sans aucun artifice particulier un étalonnage de ses différents composants, afin de pouvoir notamment alerter l'opticien lorsque la précision du dispositif de centrage n'est plus suffisante.

En effet, après que les moyens d'acquisition aient acquis une image du support à vide (c'est-à-dire entre deux opérations de centrage de lentilles), les moyens de traitement peuvent détecter les positions précises des ouvertures traversantes du support et en déduire la position courante de ce dernier afin de la comparer à sa position initiale. Les moyens de traitement peuvent ainsi mesurer l'écart entre ces deux positions et en déduire un coefficient de dérive relatif aux variations de formes et de positions des composants du dispositif de centrage.

D'autres caractéristiques avantageuses et non limitatives du support conforme à l'invention sont définies dans les revendications 2 à 6.

L'invention porte également sur un dispositif de centrage tel que défini dans la revendcation 7.

Préférentiellement, les moyens d'éclairage et les moyens d'acquisition sont situés d'un même côté du support, et il est prévu un réflecteur de l'autre côté du support.

Avantageusement aussi, le plateau présente, en creux dans sa face avant, une gorge annulaire, et le socle du support comporte une embase annulaire engagée dans ladite gorge annulaire de telle manière que le support est mobile en rotation sur le plateau autour d'un axe parallèle aux axes des ouvertures traversantes.

L'invention porte aussi sur un procédé d'étalonnage d'un tel dispositif de centrage tel que défini dans la revendication 10.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'un appareil centreur-bloqueur équipé d'un support selon l'invention ;
- la figure 2 est une vue schématique des moyens de centrage de l'appareil centreur-bloqueur de la figure 1 ;
- les figures 3 et 4 sont des vues schématiques en perspective et en plan du support de la figure 1 ;
- la figure 5 est une vue schématique en coupe du support de la figure 1 et du plateau sur lequel il repose ; et
- la figure 6 est une vue schématique en perspective d'une variante de réalisation du support de la figure 1.

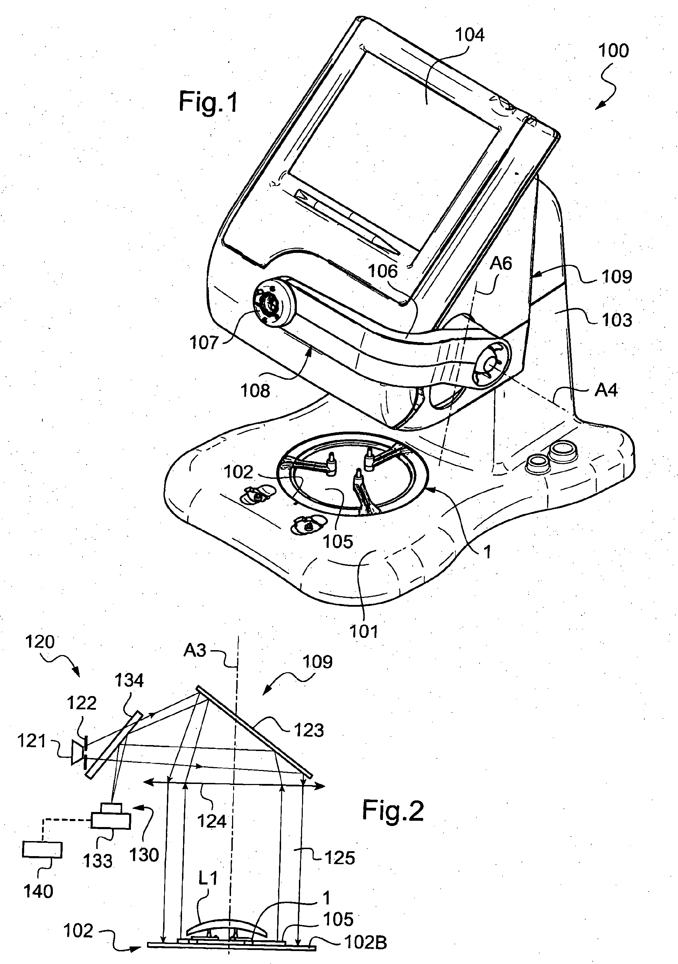

Sur la figure 1, on a représenté un appareil centreur-bloqueur 100.

Un tel appareil est généralement utilisé par un opticien après qu'il a acquis les formes des contours des entourages d'une monture de lunettes sélectionnée par son client.

Cet appareil est alors employé pour opérer des opérations de centrage et de blocage d'une lentille ophtalmique à monter sur cette monture de lunettes.

L'objectif de l'opération de centrage est de repérer le référentiel de la lentille ophtalmique, et de déterminer la position que doit occuper le contour de l'entourage dans ce référentiel afin que la lentille, une fois détourée suivant ce contour puis montée sur la monture de lunettes, se retrouve convenablement centrée en regard de l'oeil correspondant de l'individu.

L'objectif de l'opération de blocage est de déposer un accessoire (dit « accessoire de blocage ») sur la lentille ophtalmique qui puisse permettre, d'une part, de faciliter la saisie de la lentille afin de la transporter depuis l'appareil centreur-bloqueur 100 jusqu'à un appareil de détourage, et, d'autre part, de fournir un repère stable permettant d'indiquer la position du référentiel de la lentille à l'issue de son transport.

L'appareil centreur-bloqueur 100 comporte à cet effet :
- un bâti 103,
- un pupitre de travail 101 fixé au bâti 103 dans un plan horizontal,
- un écran de visualisation 104 fixé sur le bâti 103 et orienté de telle sorte qu'il est visible pour l'opticien travaillant au pupitre de travail 101,
- des moyens de centrage 109 de la lentille, fixés au bâti 103, et
- des moyens de blocage 108, montés mobiles sur le bâti 103.

Le pupitre de travail 101 présente une ouverture centrale 102 circulaire , pour le chargement d'une lentille ophtalmique.

Cette ouverture centrale 102 est obturée à l'arrière par un plateau d'appui 105 transparent et plat, sur lequel repose un support 1 de lentille ophtalmique L1 qui fait plus précisément ici l'objet de la présente invention et qui sera décrit en détail dans la suite de cet exposé.

Les moyens de blocage 108 comportent pour leur part un bras de manoeuvre 106 dont l'extrémité libre forme un embout 107 adapté à retenir un organe de blocage (non représenté) et à venir le déposer en un emplacement déterminé sur la face avant d'une lentille ophtalmique.

Ce bras de manoeuvre 106 est ici à manoeuvre manuelle. Il est toutefois guidé de telle manière que son embout 107 puisse se mouvoir seulement suivant une trajectoire prédéterminée. Il comporte pour cela deux seules mobilités par rapport au bâti 103, dont :
- une mobilité de rotation autour d'un axe A4 horizontal, pour pivoter entre une position de chargement dans laquelle son embout 107 est tourné vers l'opticien qui peut alors facilement y installer un organe de blocage, et une position intermédiaire dans laquelle l'organe de blocage fixé à l'embout 107 se trouve situé au-dessus de la lentille ophtalmique posée sur le support 1, à distance de celle-ci ; et
- une mobilité de translation suivant un axe vertical A6, pour se translater entre ladite position intermédiaire et une position finale dans laquelle l'organe de blocage vient en appui contre la face avant de la lentille ophtalmique posée sur le support 1.

En variante, on pourrait prévoir que le bras de blocage soit semi-automatisé, en motorisant chacune de ses deux mobilités.

Selon une autre variante, on pourrait également prévoir que le bras de blocage soit automatisé, auquel cas il comporterait un plus grand nombre de mobilités pour venir déposer l'organe de blocage en une position souhaitée sur la face avant de la lentille ophtalmique, avec une orientation souhaitée.

Les moyens de centrage 109 de la lentille ophtalmique sont quant à eux conçus pour déterminer la position du référentiel de la lentille ophtalmique, en repérant la position et l'orientation de différentes marques de centrage peintes ou gravées sur la face avant de la lentille ophtalmique.

Comme le montre la figure 2, ces moyens de centrage 109 comportent des moyens d'éclairage 120 de la lentille ophtalmique L1, des moyens d'acquisition 130 d'une image de la lentille ophtalmique L1 éclairée par les moyens d'éclairage 120, et des moyens de traitement 140 pour analyser l'image acquise.

Dans le mode de réalisation préféré de l'invention, les moyens d'éclairement 120 et les moyens d'acquisition 130 sont situés sur un même côté de la zone de chargement 102.

Un réflecteur 102B est alors installé de l'autre côté de la zone de chargement 102, sous le plateau d'appui 105, pour réfléchir la lumière. Ce réflecteur 102B est ici formé par un miroir fixe. Il pourrait également être formé par un miroir monté mobile en rotation autour d'un axe A3 parallèle au faisceau lumineux irradiant la lentille, de telle sorte que sa granulosité ne réduise pas la précision des mesures.

Les moyens d'éclairage 120 comprennent ici une source de lumière étendue 121 rendue ponctuelle par l'utilisation d'une plaque perforée 122, qui émet un faisceau lumineux divergent. Ils comprennent également un miroir 123 incliné à 45° qui réfléchit ce faisceau lumineux divergent et qui permet de réduire l'encombrement de l'ensemble, et une lentille convergente 124 adaptée à former un flux lumineux 125 à rayons parallèles en direction du support 1.

Les moyens d'acquisition 130 comprennent quant à eux, outre le miroir 123, un miroir semi-réfléchissant 134 incliné à 45° et une caméra numérique 133 pour acquérir cette image. Le miroir semi-réfléchissant 134, placé devant la source de lumière, permet de transmettre une partie de la lumière vers la lentille et permet de réfléchir en partie l'image de la lentille vers la caméra numérique 133. Ainsi la caméra est-elle adaptée à acquérir une image de la lentille ophtalmique L1 et du support 100, sur laquelle apparaissent notamment les marques de centrage de la lentille.

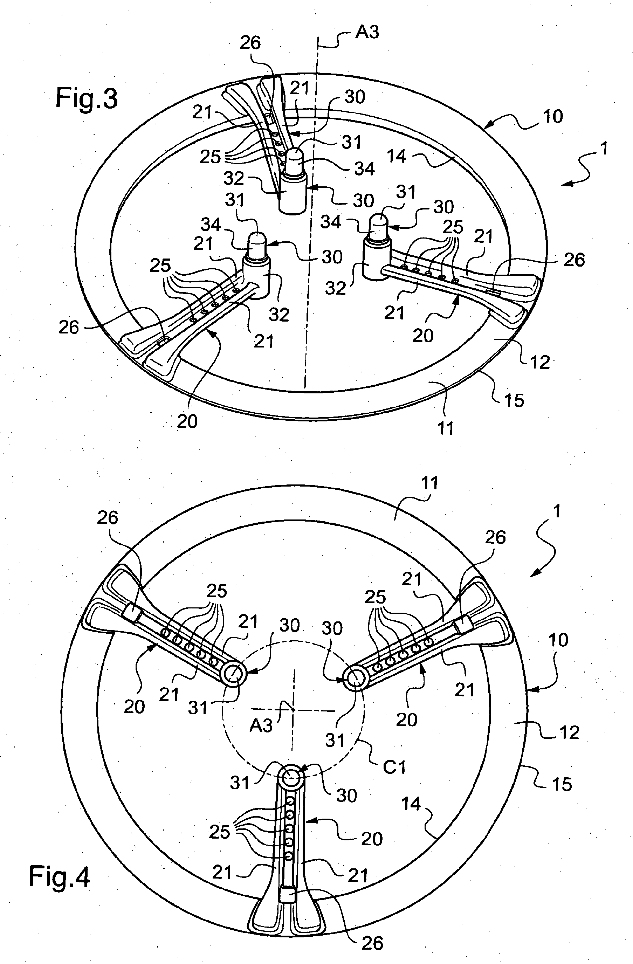

Sur les figures 3 et 4, on a représenté sous deux angles différents le support 1 qui fait plus précisément l'objet de la présente invention.

Ce support 1 comporte trois plots 30 qui s'élèvent les uns par rapport aux autres à la manière d'un trépied, pour présenter des sommets 31 par lesquels ils sont adaptés à porter la lentille ophtalmique L1. Il comporte également un socle 10 qui permet de maintenir les trois plots 30 en position fixe lorsque ces derniers supportent une lentille.

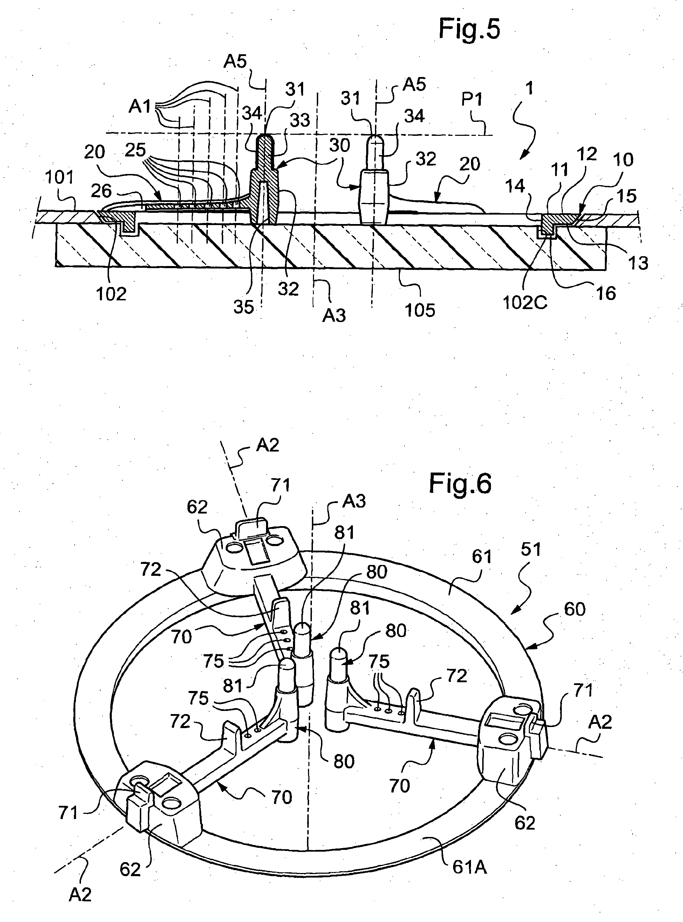

Comme le montre bien la figure 5, et selon une caractéristique particulièrement avantageuse de l'invention, le support 1 présente alors au moins trois ouvertures traversantes 25 d'axes A1 parallèles et sensiblement orthogonaux au plan P1 passant par les sommets 31 des plots 30.

Grâce à leur orientation, ces ouvertures traversantes 25 sont visibles sur chaque image acquise par les moyens d'acquisition 130 de l'appareil centreur-bloqueur 100. Ainsi, comme cela sera décrit en détail dans la suite de cet exposé, l'appareil centreur-bloqueur 100 peut régulièrement vérifier qu'il est correctement étalonné.

Dans le mode de réalisation de l'invention plus précisément représenté sur les figures 3 à 5, le socle 10 du support 1 comporte une embase annulaire 11 et trois bras 20 qui portent chacun l'un des plots 30.

L'embase annulaire 11 présente une symétrie de révolution autour de l'axe A3.

Comme le montre bien la figure 5, l'embase annulaire 11 présente une section de forme aplatie, si bien qu'elle comporte une face supérieure 12 plane, une face inférieure 13 plane, un bord intérieur 14 cylindrique, et un bord extérieur 15 conique.

Il est par ailleurs prévu des moyens d'assujettissement de cette embase annulaire 11 au plateau d'appui 105, permettant de maintenir le support 1 dans le champ de la caméra numérique 33.

Ces moyens d'assujettissement fonctionnent ici par coopération de formes.

Ils comportent en l'espèce, en saillie de la face arrière 13 de l'embase annulaire 11, une nervure circulaire 16 qui longe le bord intérieur 14 de l'embase annulaire 11 et qui présente une section de forme carrée.

Ils comportent également, en creux au centre de la face supérieure du plateau d'appui 105, une gorge circulaire 102C de diamètre identique à celui de la nervure circulaire 16, présentant une section de forme carrée.

La section de cette gorge circulaire 102C présente des dimensions identiques, au jeu près, à celles de la section de la nervure circulaire 16. De cette manière, lorsque la nervure circulaire 16 de l'embase annulaire 11 est engagée dans la gorge circulaire 102C du plateau d'appui 105, le support 1 est maintenu en position fixe sur le plateau 105, mais présente une orientation réglable autour de l'axe A3.

Grâce à cette unique mobilité, l'utilisateur peut, lorsqu'une lentille est posée sur le support 1, orienter le support 1 de la manière souhaitée sur le plateau d'appui 105, compte tenu par exemple de l'orientation de l'axe de cylindre de la lentille.

Comme le montrent les figures 3 et 4, les trois bras 20 présentent des formes identiques.

Ils s'étendent chacun radialement, depuis l'embase annulaire 11 vers le centre de cette embase, et sont régulièrement répartis sur l'embase annulaire 11, avec un écart angulaire de 120 degrés les uns par rapport aux autres.

Comme le montre la figure 5, les bras 20 s'étendent plus précisément à partir de la face supérieure 12 de l'embase annulaire 11, dans le prolongement de celle-ci. De cette manière, les bras 20 sont situés à distance de la face supérieure du plateau d'appui 105, ce qui permet de réduire les frottements lorsque l'usager souhaite régler l'orientation du support 1 autour de l'axe A3.

Ces bras 20 s'étendent en longueur sur une distance inférieure au rayon de l'embase annulaire 11, de sorte que leurs extrémités libres s'étendent à distance les uns des autres. Les extrémités libres des bras 20 sont ici inscrites dans un cercle C1 de diamètre égal à 30 millimètres (figure 4).

Les bras 20 présentent des sections aplaties, globalement rectangulaires, et sont renforcés sur leurs faces supérieures par deux nervures latérales 21 qui s'étendent en longueur depuis l'une jusqu'à l'autre de leurs extrémités.

Comme le montre bien la figure 5, chaque plot 30 présente une symétrie de révolution autour d'un axe A5 parallèle à l'axe A3.

Chaque plot 30 présente plus précisément une partie arrière 32 tronconique qui s'effile légèrement vers l'avant, et une partie avant 33 cylindrique dont l'extrémité supérieure est arrondie.

La partie avant 33 de chaque plot 30 est ici revêtue d'un capuchon 34 en caoutchouc permettant d'éviter de rayer la lentille ophtalmique L1.

La partie arrière 32 de chaque plot 30 se raccorde par sa face latérale au bras 20 correspondant. Cette partie arrière 32 présente par ailleurs, en creux dans sa face arrière, une cavité 35 pouvant éventuellement loger un patin glissant afin de faciliter le réglage par l'usager de l'orientation du support 1 sur le plateau d'appui 105.

Ici, les parties avant et arrière des plots 30 viennent de formation d'une seule pièce avec les bras 20 et l'embase annulaire 11 du support 1, par moulage d'une matière plastique ou métallique.

Telles que représentées sur les figures, les ouvertures traversantes 25 prévues dans le support 1 sont situées dans les bras 20 de celui-ci.

Elles sont alors avantageusement réparties sur au moins deux des trois bras 20, et sont même préférentiellement réparties sur les trois bras 20.

En l'espèce, il est prévu cinq ouvertures traversantes 25 au travers de chaque bras 20, régulièrement espacées deux à deux le long de l'axe longitudinal de chaque bras 20.

Ces ouvertures traversantes 25 présentent ici des diamètres supérieurs à 1 millimètre, de manière à être détectables sur les images acquises par la caméra numérique 33 (compte tenu de la résolution de cette caméra et du grossissement des moyens de centrage).

Ces ouvertures traversantes 25 présentent par ailleurs des diamètres inférieurs à 2 millimètres, de manière à ce que leur position soit mesurable avec précision (compte tenu également de la résolution de la caméra et du grossissement des moyens de centrage).

Il est par ailleurs ici prévu, pour faciliter le démoulage du support 1, une sixième ouverture 26 dans chaque bras 20, situé au niveau du bord intérieur 14 de l'embase annulaire 11.

Grâce aux ouvertures traversantes 25 prévues dans ce support 1, l'appareil centreur-bloqueur 100 peut régulièrement procéder à son auto-étalonnage de la manière suivante.

Initialement, en usine ou lors d'une opération d'entretien de l'appareil centreur-bloqueur 100 par un technicien spécialisé, les moyens de centrage 109 de l'appareil centreur-bloqueur 100 sont alignés optiquement, de manière que l'appareil puisse réaliser des mesures précises.

A l'issue de cette opération, les moyens d'acquisition 130 acquièrent une image du support 1 à vide, c'est-à-dire lorsqu'aucune lentille ophtalmique n'est posée dessus.

L'image est ensuite traitée de manière à repérer les positions des centres des quinze ouvertures traversantes 25, et à en déduire la position initiale Pₜₒ du centre du support 1.

Régulièrement ensuite, par exemple à chaque démarrage ou à chaque utilisation de l'appareil centreur-bloqueur 100, il est prévu d'acquérir une nouvelle image du support 1 à vide afin d'en déduire la nouvelle position Pₜ du centre du support 1.

Alors, cette nouvelle position Pₜ du centre du support 1 est comparée à la position initiale Pₜₒ. L'écart mesuré entre ces deux positions permet ainsi de détecter tout décalage d'un des composants des moyens de centrage 109 ou toute modification de forme de l'un de ces composants.

Alors, au-delà d'un écart-seuil, les moyens de traitement 140 sont programmés pour alerter l'usager via l'écran 104, en affichant un message d'alerte lui indiquant que l'appareil centreur-bloqueur 100 est déréglé et que ses composants doivent être réajustés par un technicien spécialisé.

En variante, on pourra prévoir que les moyens de traitement 140 surveillent l'évolution de l'écart mesuré, de manière à vérifier notamment que cette évolution est régulière. On pourra alors prévoir, si cette évolution est irrégulière, d'alerter l'usager en affichant un message d'alerte sur l'écran 104 afin de lui indiquer la présence d'un problème.

Les moyens de traitement 140 pourront aussi, en analysant cette évolution, calculer la durée restante avant que l'écart mesuré dépasse l'écart-seuil, afin notamment de pouvoir alerter le technicien en avance.

On peut aussi prévoir que, lors du centrage de chaque lentille ophtalmique, les moyens de traitement 140 prennent l'écart mesuré en considération afin de corriger en conséquence les mesures effectuées.

Sur la figure 6, on a représenté une variante de réalisation du support 51 selon l'invention.

Dans cette variante, le support 51 comporte trois plots 80 identiques aux plots 30 précédemment décrits, qui forment ensemble un trépied et qui présentent des sommets 81 par lesquels ils sont adaptés à porter la lentille ophtalmique.

Il comporte également un socle 60 comprenant une embase annulaire 61 et trois bras 70 qui portent chacun l'un des plots 80.

Contrairement au support 1 représenté sur les figures 2 à 5, dans cette variante, les bras 70 du support 51 sont montés libres en translation sur l'embase annulaire 61, suivant des axes A2 radiaux par rapport à l'axe A3.

L'embase annulaire 61 présente à cet effet un corps 61A de forme semblable à celle de l'embase annulaire 11 précédemment décrite, ainsi que trois protubérances 62 en saillie de la face supérieure de son corps, écartées angulairement les unes des autres de 120 degrés.

Ces trois protubérances 62 définissent, avec la face supérieure du corps 61A de l'embase annulaire 61, trois logements traversants d'axes A2. Chacun de ces trois logements traversants est profilé suivant son axe A2 et présente une section transversale de forme rectangulaire.

Les trois bras 70 présentent quant à eux des formes identiques.

Chacun de ces trois bras 70 est allongé suivant son axe A2 et présente une section transversale de forme rectangulaire, aux dimensions égales (au jeu près) à celles de la section transversale du logement traversant prévu en correspondance dans l'embase annulaire 61.

Chaque bras 70 est ainsi monté libre en translation dans le logement traversant prévu en correspondance dans l'embase annulaire 61.

Chaque bras 70 présente une extrémité extérieure, qui débouche du logement traversant à l'extérieur de l'embase annulaire 61, et une extrémité intérieure opposée.

Chaque bras 70 comporte alors, sur son extrémité extérieure, une patte 71 qui s'élève en saillie sur sa face avant et qui forme un levier de manoeuvre facilitant le coulissement du bras 70 dans son logement traversant.

Les pattes 71 des bras 70 permettent ainsi de rapprocher ou d'éloigner les plots 80 les uns des autres, selon que la lentille ophtalmique à accueillir présente ou non un grand diamètre.

Il est alors prévu des moyens de butée, pour éviter que les bras ne puissent sortir de leurs logements traversants. Ces moyens de butée sont agencés de telle manière que les sommets 81 des plots 80 peuvent être positionnés suivant des cercles circonscrits de diamètres compris entre 15 et 45 millimètres.

Ces moyens de butée sont formés, d'un côté, par les pattes 71, et, de l'autre, par des dents 72 qui s'élèvent en saillie des faces avant des bras 70, environ à mi-longueur de ces bras.

Dans cette variante, le support 51 présente trois ouvertures traversantes 75 dans chacun de ses bras 70, d'axes parallèles et sensiblement orthogonaux au plan passant par les sommets 81 des plots 80.

Les ouvertures traversantes 75 prévues dans chaque bras 70 sont régulièrement espacées deux à deux le long de l'axe A2, et sont situées entre les plots 80 et les dents 72.

On observe enfin sur la figure 5 que l'ouverture centrale 102 prévue dans le pupitre de travail 101 présente ici un bord incliné, de forme conique correspondant à la forme du bord extérieur 15 de l'embase annulaire 11 du support 1. Cette correspondance de formes permet ainsi de participer au guidage en rotation du support 1 par rapport au plateau d'appui 105 autour de l'axe A3.

La présente invention pourrait notamment s'appliquer à un appareil de centrage, dépourvu de moyens de blocage.

Elle pourrait également s'appliquer à un support équipé de moyens d'assujettissement au plateau d'appui de formes différentes de celle représentée sur les figures. Ces moyens d'assujettissement pourraient par exemple être des moyens d'encliquetage, de collage, de vissage, ...

## Revendications

1. Support (1) de lentille ophtalmique (L1) pour dispositif de centrage (100), comportant :
- un socle (10), et
- au moins trois plots (30) qui s'élèvent à partir du socle (10) pour présenter des extrémités libres (31) sensiblement coplanaires, par lesquelles ils sont adaptés à porter la lentille ophtalmique (L1),
**caractérisé en ce qu'**il présente au moins trois ouvertures traversantes (25) d'axes (A1) sensiblement orthogonaux au plan (P1) des extrémités libres (31) des trois plots (30), qui, d'une part, débouchent librement vers l'avant et vers l'arrière du support (1) de sorte qu'elles ne sont pas obturées par le reste du support (1) si bien que la lumière peut traverser le support (1) de part en part au niveau de ces ouvertures traversantes (25), et qui, d'autre part, sont positionnées de manière à être repérables par le dispositif de centrage (100).

2. Support (1) selon la revendication précédente, dans lequel le socle (10) comporte trois bras (20) qui sont liés entre eux par une embase (11) et qui portent chacun l'un desdits plots (30).

3. Support (1) selon la revendication précédente, dans lequel lesdites ouvertures traversantes (25) sont réparties sur au moins deux des trois bras (20).

4. Support (1) selon l'une des deux revendications précédentes, dans lequel il est prévu au moins une ouverture traversante (25) dans chaque bras (20).

5. Support (1) selon l'une des revendications 2 à 4, dans lequel les trois bras (20) sont fixes par rapport à l'embase (11).

6. Support (1) selon l'une des revendications 2 à 4, dans lequel au moins l'un des trois bras (70) est monté mobile en translation sur l'embase (61), suivant un axe (A2) parallèle au plan (P1) des extrémités libres (31) des trois plots (30).

7. Dispositif de centrage (100) d'une lentille ophtalmique (L1), comportant :
- un plateau (105) accueillant un support (1) selon l'une des revendications précédentes,
- des moyens d'éclairage (120), aptes à éclairer ia lentille ophtalmique (L1) portée par le support (1),
- des moyens d'acquisition (130), aptes à acquérir une image de la lentille ophtalmique (L1) portée par le support (1), et
- des moyens de traitement (140), aptes à déduire de l'image acquise par les moyens d'acquisition (130), d'une part, la position de la lentille ophtalmique (L1), et, d'autre part, la position des ouvertures traversantes (25) du support (1).

8. Dispositif de centrage (100) selon la revendication précédente, dans lequel les moyens d'éclairage (120) et les moyens d'acquisition (130) sont situés d'un même côté du support (1), et dans lequel il est prévu un réflecteur (102B) de l'autre côté du support (1).

9. Dispositif de centrage (100) selon l'une des deux revendications précédentes, dans lequel le plateau (105) présente, en creux dans sa face avant, une gorge annulaire (102C), et dans lequel le socle (10) du support (1) comporte une embase (11) annulaire engagée dans ladite gorge annulaire (102C) de telle manière que le support (1) est mobile en rotation sur le plateau (105) autour d'un axe (A3) parallèle aux axes (A3) des ouvertures traversantes (25).

10. Procédé d'étalonnage d'un dispositif de centrage (100) selon l'une des revendications 7 à 9, dans lequel il est prévu :
- une étape préalable d'acquisition d'une position initiale (Pₜₒ) du support
- une étape d'acquisition d'une image du support (1) à vide;
- une étape de traitement d'images pour repérer les ; positions des ouvertures traversantes (25) du support (1) sur l'image acquise et pour en déduire une position courante (Pₜ) du support (1),
- une étape de comparaison de la position initiale (Pₜₒ) et de la position courante (Pₜ) du support (1), et
- une étape de déduction, en fonction du résultat de cette comparaison, d'un coefficient de dérive relatif aux variations de formes et de positions des composants du dispositif de centrage (100).

## Patentansprüche

1. Halter (1) für ophtalmologische Linsen (L1) für eine Zentriervorrichtung (100), umfassend:
- einen Sockel (10), und
- mindestens drei Kontaktstellen (30), die von dem Sockel (10) abstehen, um freie Enden (31), die im Wesentlichen in derselben Ebene liegen, aufzuweisen, durch welche sie dazu ausgestaltet sind, die ophtalmologische Linse (L1) zu halten,
**dadurch gekennzeichnet, dass** er mindestens drei durchgehende Öffnungen (25) mit Achsen (A1) aufweist, die im Wesentlichen orthogonal zu der Ebene (P1) der freien Enden (31) der drei Kontaktstellen (30) verlaufen, die einerseits frei zu der Vorderseite und zu der Hinterseite des Halters (1) dergestalt einmünden, dass sie nicht von dem verbleibenden Halter (1) verdeckt werden, so dass das Licht durch den Halter (1) an diesen durchgehenden Öffnungen (25) hindurch gehen kann, und die andererseits dergestalt angeordnet sind, dass sie von der Zentriervorrichtung (100) erkannt werden können.

2. Halter (1) nach dem vorhergehenden Anspruch, wobei der Sockel (10) drei Arme (20) umfasst, die untereinander durch eine Basis (11) miteinander verbunden sind, und die jeweils eine der Kontaktstellen (30) tragen.

3. Halter (1) nach dem vorhergehenden Anspruch, wobei die durchgehenden Öffnungen (25) auf mindestens zwei der drei Arme (20) verteilt sind.

4. Halter (1) nach einem dem beiden vorhergehenden Ansprüche, wobei mindestens eine durchgehende Öffnung (25) in jedem Arm (20) vorgesehen ist.

5. Halter (1) nach einem der Ansprüche 2 bis 4, wobei die drei Arme (20) im Verhältnis zu der Basis (11) feststehend sind.

6. Halter (1) nach einem der Ansprüche 2 bis 4, wobei mindestens einer der drei Arme (70) auf der Basis (61) gemäß einer Achse (A2), die parallel zu der Ebene (P1) der freien Enden (31) der drei Kontaktstellen (30) verläuft, verschiebbar montiert ist.

7. Zentriervorrichtung (100) einer ophtalmologischen Linse (L1), umfassend:
- eine Platte (105), die einen Halter (1) nach einem der vorhergehenden Ansprüche aufnimmt,
- Beleuchtungsmittel (120), die dazu in der Lage sind, die ophtalmologische Linse (L1), die von dem Halter (1) getragen wird, zu erleuchten,
- Erfassungsmittel (130), die dazu in der Lage sind, ein Bild der ophtalmologischen Linse (L1), die von dem Halter (1) gehalten wird, aufzunehmen, und
- Verarbeitungsmittel (140), die dazu in der Lage sind, aus dem Bild, das von den Erfassungsmitteln (130) aufgenommen wird, einerseits die Position der ophtalmologischen Linse (L1) und andererseits die Position der durch den Halter (1) hindurchgehenden Öffnungen (25) abzuleiten.

8. Zentriervorrichtung (100) nach dem vorhergehenden Anspruch, wobei sich die Beleuchtungsmittel (120) und die Erfassungsmittel (130) auf derselben Seite des Halters (1) befinden, wobei ein Reflektor (102B) auf der anderen Seite des Halters (1) vorgesehen ist.

9. Zentriervorrichtung (100) nach einem der beiden vorhergehenden Ansprüche, wobei die Platte (105) eine ringförmige Ausnehmung (102C) eingelassen in ihre Vorderseite aufweist, und wobei der Sockel (10) des Halters (1) eine ringförmige Basis (11) umfasst, die in die ringförmige Ausnehmung (102C) dergestalt eingreift, dass der Halter (1) auf der Platte (105) um eine Achse (A3) drehbeweglich ist, die parallel zu den Achsen (A3) der durchgehenden Öffnungen (25) verläuft.

10. Verfahren zum Eichen einer Zentriervorrichtung (100) nach einem der Ansprüche 7 bis 9, wobei Folgendes vorgesehen ist:
- ein vorausgehender Schritt zum Erfassen einer Anfangsposition (Pₜₒ) des Halters (1),
- ein Erfassungsschritt eines Bildes des leeren Halters (1),
- ein Verarbeitungsschritt von Bildern, um die Positionen der durchgehenden Öffnungen (25) des Halters (1) auf dem aufgenommenen Bild zu erkennen und um daraus die aktuelle Position (Pₜ) des Halters (1) abzuleiten,
- einen Vergleichsschritt der Anfangsposition (Pₜₒ) und der aktuellen Position (Pₜ) des Halters (1), und
- einen Ableitungsschritt in Abhängigkeit des Ergebnisses dieses Vergleichs eines Abweichungskoeffizienten im Verhältnis zu Variationen der Formen und Positionen der Komponenten der Zentriervorrichtung (100).

## Claims

1. An ophthalmic lens (L1) holder (1) for a centering device (100), comprising:
- a stand (10); and
- at least three pads (30) that rise up from the stand (10) in order to present substantially coplanar free ends (31) via which the pads are designed to bear the ophthalmic lens (L1),
**characterized in that** the holder has the least three through-apertures (25) having axes (A1) substantially orthogonal to the plane (P1) of the free ends (31) of the three pads (30), which through-apertures (25) emerge freely onto the front and back of the holder (1) in such a manner that they are not closed by the rest of the holder (1) so that the light may passes through the holder (1) at the through-apertures (25), and which through-apertures (25) are positioned in order to be locatable by the centering device (100).

2. The holder (1) as claimed in the preceding claim, in which the stand (10) comprises three arms (20) that are connected to one another via a base (11) and that each bear one of said pads (30).

3. The holder (1) as claimed in the preceding claim, in which said through-apertures (25) are distributed over at least two of the three arms (20).

4. The holder (1) as claimed in either of the two preceding claims, in which at least one through-aperture (25) is provided in each arm (20).

5. The holder (1) as claimed in one of claims 2 to 4, in which the three arms (20) are fixed relative to the base (11).

6. The holder (1) as claimed in one of claims 2 to 4, in which at least one of the three arms (70) is mounted so as to be able to move translatably on the base (61), along an axis (A2) parallel to the plane (P1) of the free ends (31) of the three pads (30).

7. A device (100) for centering an ophthalmic lens (L1), comprising:
- a platen (105) accepting a holder (1) according to one of the preceding claims;
- illuminating means (120) that are able to illuminate the ophthalmic lens (L1) borne by the holder (1);
- acquiring means (130) that are able to acquire an image of the ophthalmic lens (L1) borne by the holder (1); and
- processing means (140) that are able to deduce from the image acquired by the acquiring means (130), on the one hand, the position of the ophthalmic lens (L1), and on the other hand, the position of the through-apertures (25) in the holder (1).

8. The centering device (100) as claimed in the preceding claim, in which the illuminating means (120) and the acquiring means (130) are located on the same side of the holder (1), and in which a reflector (102B) is provided on the other side of the support (1).

9. The centering device (100) as claimed in one of the two preceding claims, in which the platen (105) has, recessed into its front face, an annular groove (102C), and in which the stand (10) of the holder (1) comprises an annular base (11) engaged in said annular groove (102C) in such a way that the holder (1) is able to rotate on the platen (105) about an axis (A3) parallel to the axes (A3) of the through-apertures (25).

10. A method for calibrating a centering device (100) as claimed in one of claims 7 to 9, in which provision is made for:
- a prior step of acquiring an initial position (Pₜₒ) of the holder (1);
- a step of acquiring an image of the empty holder (1);
- a step of processing images in order to locate the positions of the through-apertures (25) in the holder (1) in the acquired image and in order to deduce therefrom a current position (Pₜ) of the holder (1);
- a step of comparing the initial position (Pₜₒ) and the current position (Pₜ) of the holder (1); and
- a step of deducing, depending on the result of this comparison, a drift coefficient relating to variations in the shapes and positions of the components of the centering device (100).
